# EUROPEAN PATENT APPLICATION

(11) **EP 1 510 454 A1**
(43) Date of publication of application: **02.03.2005**
(21) Application number: 04077384.8
(22) Date of filing: 23.08.2004
(51) Int. Cl.: B64C 1/12, B64C 1/40, B61D 17/18, B60R 13/08, B60R 13/02, B63B 29/02

(54) **Interior panel integrated with insulation and air ducts**

(30) Priority: 28.08.2003 US 651278
(71) Applicant: The Boeing Company, Seattle, Washington 98124-2207 (US)
(72) Inventor: Gideon, David E., Seattle, Washington 98124-2207 (US); Vaughan, David A., Seattle, Washington 98124-2207 (US); Jackson, Eugene A., Seattle, Washington 98124-2207 (US)
(74) Representative: Land, Addick Adrianus Gosling

(57) **Abstract**

A mobile platform interior panel (10) is provided that includes a body (14) formed by a low pressure injection process and at least one of a duct (18) and a layer of insulation (22) integrated with the body. The low pressure injection process allows the duct (18) and insulation (22) to be integrated with the body (14) simultaneously with the forming of the panel (10). More specifically, the duct (18) is integrated with the panel (10) by forming at least one internal cavity within the panel as the panel (10) is formed. Additionally, the insulation (22) is integrated with the panel by forming the panel using a low pressure injection material having desired insulative properties.

## Description

### FIELD OF INVENTION

The invention relates generally to interior panels of a mobile platform. More specifically, the invention relates to mobile platform interior panels having integrated ducts and insulation.

### BACKGROUND OF THE INVENTION

The interior lining structures, e.g. walls, ceiling and/or floors, of a mobile platform, such as an aircraft, bus or ship, are typically formed by first independently manufacturing interior panels, ducts, and insulation blankets. The ducts are then installed within the frame bays of the mobile platform fuselage structure where applicable. Next, the insulation blankets are installed where applicable, and finally the interior panels are installed covering any insulation and/or ducts.

The insulation blankets insulate the cabin environment from noise and cold conducted by an exterior skin of the mobile platform. While the process of fabricating the blankets is straightforward, the interior design of the mobile platform may require many unique blanket shapes. Ducts used to convey air or used as utility raceways for passing such things electrical wiring, optical fibers, or plumbing pipes are generally made from a fiber, e.g. Kevlar®, with an epoxy resin. The simplest ducts to manufacture are round in cross-section, have a substantially consistent cross-sectional area, and are straight along their length. Nonetheless, the ducts require time to make and create additional steps in the construction of mobile platform interior lining structures. Additionally, ducts can have varying cross sectional shapes and areas, and follow a curving path, thereby requiring a more complicated manufacturing process. This more complicated manufacturing process adds additional time, complexity and cost to the construction of mobile platform interior lining structures.

The interior panels are commonly fabricated using a compression molding process. Typically, in the compression molding process, a high power press combines composite exterior sheets, such as fiberglass-reinforced phenolic sheets, and a core comprising a compound, such as Nomex®, in a heated compression mold. The mold imparts both a contour and a final thickness to the formed part. Once the press cycle is complete, excess material, i.e., run out or flash, is trimmed from the part and features, such as holes and cutouts, are added. Using the compression molding process to form the interior panels is costly and labor intensive. Further steps involved in fabricating the interior panels, such as imparting a decorative finish and adding components such as windows, window shades and fastening devices for affixing the panels to the mobile platform fuselage structure, add even more time and cost to the process. This in turn, adds additional time and cost to the construction of mobile platform interior lining structures.

Therefore, it is desirable to form the interior lining structures of a mobile platform in a manner that reduces flow time, equipment, labor costs and manufacturing costs.

### BRIEF SUMMARY OF THE INVENTION

In one preferred embodiment of the present invention, a mobile platform interior panel is provided. The interior panel includes a body formed by an injection molding process, at least one duct integrated with the body and at least one layer of insulation also integrated with the body. Preferably, the panel is formed using a low pressure forming process, such as reaction injection molding (RIM). The low pressure forming process allows the duct and insulation to be integrated with the body simultaneously with forming the panel. More specifically, the duct is integrated with the panel by forming at least one internal cavity through the panel as the panel is formed. Additionally, the insulation is integrated with the panel by forming the panel of a material having desired insulative properties.

In another preferred embodiment, the present invention provides a method of manufacturing a mobile platform interior panel. The method includes forming the panel by injecting at least one injection molding material into at least one panel mold and integrating at least one duct and at least one layer of insulation with the panel. Preferably the method includes forming the panel utilizing a low pressure forming process wherein at least one low pressure foam is injected into the panel mold. Additionally, the duct is integrated with the panel by forming at least one internal cavity through the panel simultaneously with forming the panel. Furthermore, the insulation is integrated with the panel by selecting the low pressure foam to have desired insulative properties.

### BRIEF DESCRIPTION OF THE DRAWINGS

The present invention will become more fully understood from the detailed description and accompanying drawings, wherein;
Figure 1 is a perspective view of an interior panel for a mobile platform, in accordance with one preferred embodiment of the present invention;
Figure 2 is a perspective view of a preferred embodiment of a body of the interior panel shown in Figure 1;
Figure 3 is a perspective view of another preferred embodiment of the body of the interior panel shown in Figure 1;
Figure 4 is a perspective view of a preferred embodiment of a duct integrated with the interior panel shown in Figure 1;
Figure 5 is a perspective view of an alternate preferred embodiment of a duct integrated with the interior panel shown in Figure 1;
Figure 6 is a perspective view of another preferred embodiment of the duct integrated with the interior panel shown in Figure 1;
Figure 7 is a perspective view of a preferred embodiment of an insulation feature included in the interior panel shown in Figure 1;
Figure 8 is a perspective view of the interior panel shown in Figure 1 including at least one reinforcement insert;
Figure 9 is a perspective view of the interior panel shown in Figure 1 including at least one reinforcement shell;
Figure 10 is a perspective view of the interior panel shown in Figure 1 illustrating an exemplary configuration of the duct included in the interior panel;
Figure 11 is a perspective view of the interior panel shown in Figure 1 illustrating another exemplary configuration of the duct included in the interior panel;
Figure 12 is a perspective view of the interior panel shown in Figure 1 illustrating yet another exemplary configuration of the duct included in the interior panel;
Figure 13 is a perspective view of the interior panel shown in Figure 1 illustrating still yet another exemplary configuration of the duct included in the interior panel; and
Figure 14 is a perspective view of the interior panel shown in Figure 1 illustrating even yet another exemplary configuration of the duct included in the interior panel.

Corresponding reference numerals indicate corresponding parts throughout the several views of drawings.

### DETAILED DESCRIPTION OF THE INVENTION

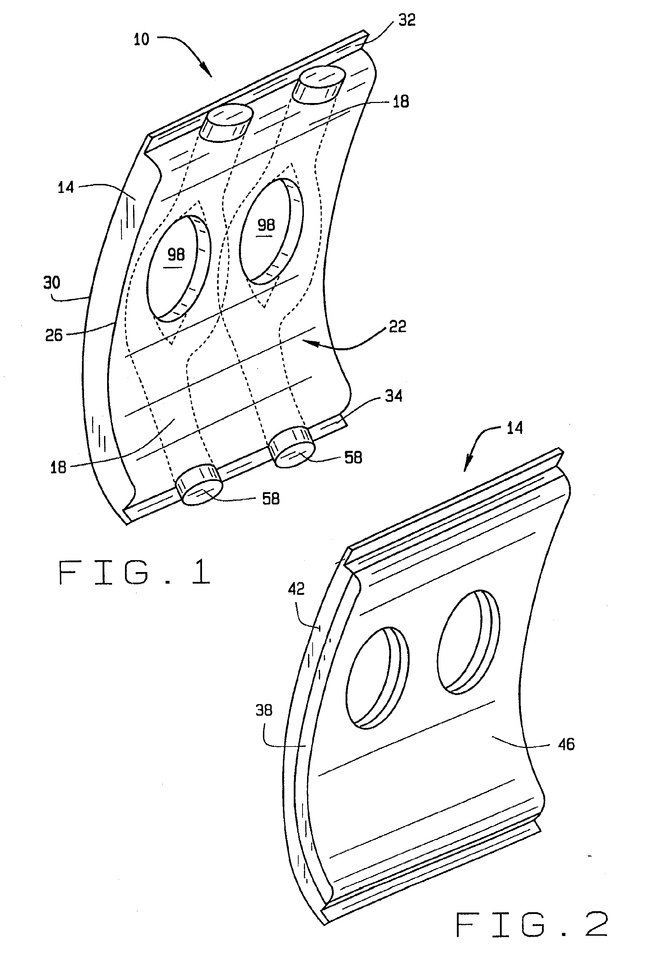

Figure 1 is a perspective view of an interior panel 10 for a mobile platform, such as an aircraft, bus or ship, in accordance with one preferred embodiment of the present invention. The interior panel 10 is utilized to form interior lining structures of the mobile platform, such as walls, ceiling and/or floors. Although the present invention will be described and illustrated herein in reference to sidewall panels, i.e. interior panel 10, it will be appreciated that the invention is equally applicable to floor and ceiling panels. Thus, the scope of the invention is not limited to sidewall panels.

The interior panel 10 includes a body 14, at least one duct 18 integrated with the body 10 and at least one layer of insulation 22 also integrated with the body 14. In Figure 1, the layer of insulation 22 comprises the material from which the body 14 is constructed, as described further below. Additionally, although Figure 1 illustrates the duct 18 as being internally integrated with the body 14, the duct 18 can also be externally integrated with the body 14, as described further below.

The interior panel 10 can include the body 14 having only one of either the duct 18 or the insulation 22 integrated therewith, and remain within the scope of the invention. However, the invention will be described herein in reference to one preferred exemplary embodiment wherein the interior panel 10 includes both the duct 18 and the insulation 22 integrated with the body 14

The body 14 is manufactured using a low pressure forming process wherein at least on injection molding material is injected into at least one panel mold cavity. Once the molding material is cured the body 14 can be removed from the panel mold cavity. In one preferred embodiment, the injection molding material is a low pressure foam such as polyimide, polyetherimide, phenolic or polyurethane.

In another preferred embodiment, the low pressure forming process used is a reaction injection molding (RIM) process. The RIM process injects at least two chemicals, for example isocyanate and polyol, into the panel mold cavity. The two chemicals are simultaneously mixed and injected into panel mold cavity where the two chemicals react to form a low pressure foam such as polyurethane foam. The chemical mixture begins expanding as soon as it is mixed. As the mixture expands, it fills the panel mold cavity. The amount of material injected is calculated to fill the mold at a specified density. The reaction ceases in a short time, e.g. less than one minute, at which time the panel body 14 is withdrawn from the panel mold cavity.

Preferably, the low pressure foam or chemicals combined to create the low pressure foam are selected to provide highly effective insulation properties. For example, polyurethane foam is a highly effective insulation material. Additionally, the low pressure foam or chemicals to be combined to create the low pressure foam are selected to provide desired fire resistant properties.

The nature of the low pressure forming process offers a great deal of flexibility in the shape and thickness of the panel body 14. For example, a front side 26 and a back side 30 of the panel body 14 can have dramatically different geometries. For clarity, it will be appreciated that the front side 26 of the panel body 14 is the side of the panel body 14 that will face the interior of the mobile platform, while the back side 30 will face the exterior of the mobile platform. Additionally, the thickness of the panel body 14 can vary significantly over the surface of the panel body 14. Thus, any desired thickness can be provided for insulation performance, to create space for other elements to be integrated into the panel body 14, and/or to avoid objects situated behind the panel 10, e.g. components of the mobile platform fuselage structure. As described further below, the injection molding material, preferably the low pressure foam, will flow around and encapsulate parts in the panel mold cavity. Thus, the completed panel body 14 may include inserted details, such as fasteners and handles, and/or components, such as the duct 18, which become integrally formed within the panel body 14. In one preferred embodiment, the body 14 includes an upper retaining extension 32 and a lower retaining extension 34. The upper and lower retaining extensions 32 and 34 are used to install the interior panel 10. The upper and lower retaining extensions 32 and 34 couple the interior panel 10 to the fuselage structure of the mobile platform without the use of fasteners, or alternatively, using a reduced number of fasteners. Although the extensions 32 and 34 are shown in Figure 1 to be constructed on the back side of the body 14, alternative the extensions 32 and 34 can be constructed on the front side of the body 14. In another preferred embodiment, the interior panel 10 can be installed using any suitable means for fastening the interior panel 10 the fuselage structure. For example the interior panel 10 can be installed with retainer stripes and shock mounts using nut and bolt type fasteners.

Figure 2 is a perspective view of an alternate preferred embodiment of the body 14, wherein the body 14 includes a front shell portion 38 and a back shell portion 42. For clarity, it will be appreciated that the front shell portion 38 will face the interior of the mobile platform, while the back shell portion 42 will face the exterior of the mobile platform.

The front shell portion 38 and the back shell portion 42 are fused together, enclosing the space between them, to form a panel shell 46. The panel shell 46 is then injected with the injection molding material to from the body 14, preferably using the RIM process. The front and back shell portions 38 and 42 can be formed using any suitable process, for example a compression molding process. In one preferred embodiment, the front and back shell portions 38 and 42 constructed of are vacuum formed thermo-plastic and then fused together at their periphery to form the panel shell 46.

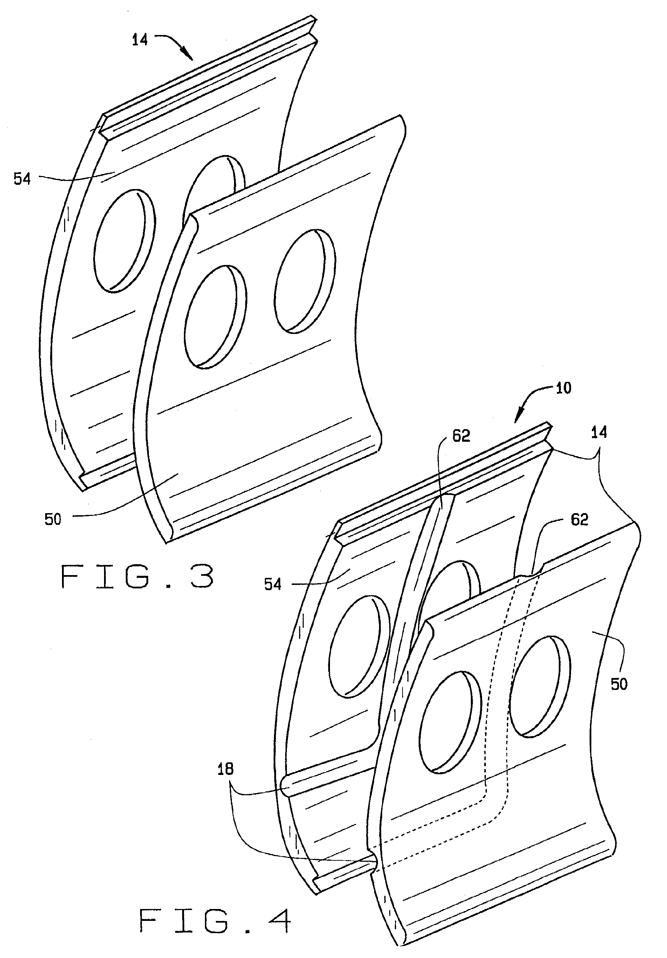

Figure 3 is a perspective view of another alternate preferred embodiment of the body 14, wherein the body 14 includes a front panel portion 50 and a back panel portion 54. For clarity, it will be appreciated that the front panel portion 50 of the panel body 14 is the side of the panel body 14 that will face the interior of the mobile platform, while the back panel portion 54 will face the exterior of the mobile platform. The front and back panel portions 50 and 54 are formed using the low pressure forming process, preferably the RIM process, as described above. That is, the front panel portion 50 is formed by injecting the injection molding material, preferably the low pressure foam, into a front panel portion mold cavity. Similarly, the back panel portion 54 is formed by injecting the injection molding material, preferably the low pressure foam, into a back panel portion mold cavity. The front and back panel portions 50 and 54 are then bonded or fused together for form the body 14.

Referring again to Figure 1, preferably, the duct 18 is an air duct connectable to an environmental control system (ECS) of the mobile platform. However, it will be appreciated that the duct 18 can be used for purposes other than the passage of conditioned air. For example, the duct 18 can be used as utility raceway for passing such things as electrical wiring, optical fibers, plumbing pipes, to reduce weight of the interior panel 10 and/or to increase sonic or thermal insulation performance of the interior panel 10. In one preferred embodiment of the interior panel 10, the duct 18 is an internal cavity integrally formed with the body 14 by encapsulating a hollow conduit 58 within the body 14. The conduit 58 is secured inside the panel mold cavity prior to injection of the injection molding material. Once the conduit 58 is secured inside the panel mold cavity, the injection molding material is injected into the mold, preferably utilizing the RIM process. The injection molding material encapsulates the conduit 58 such that the duct 18 is integrated with the body 14 by integrally forming the duct 18 within the body 14.

Referring now to Figure 4, in another preferred embodiment of the interior panel 10, the duct 18 is an internal cavity integrally formed with the body 14 by opposing recesses 62 in the front and back panel portions 50 and 54. The front and back panel portions 50 and 54 are described above in reference to Figure 3. Each of the front and back panel portions 50 and 54 include at least one recess 62 formed in the backside of each panel portion 50 and 54. As described above, the front and back panel portions 50 and 54 are bonded or fused together to form the body 14. The recesses 62 are located on the back side of each panel portion 50 and 54 such that when the front and back panel portion 50 and 54 are bonded or fused together, the recesses 62 mate to form the duct 18. Thus, the duct 18 is integrated with the body 14 by integrally forming the duct 18 within the body 14.

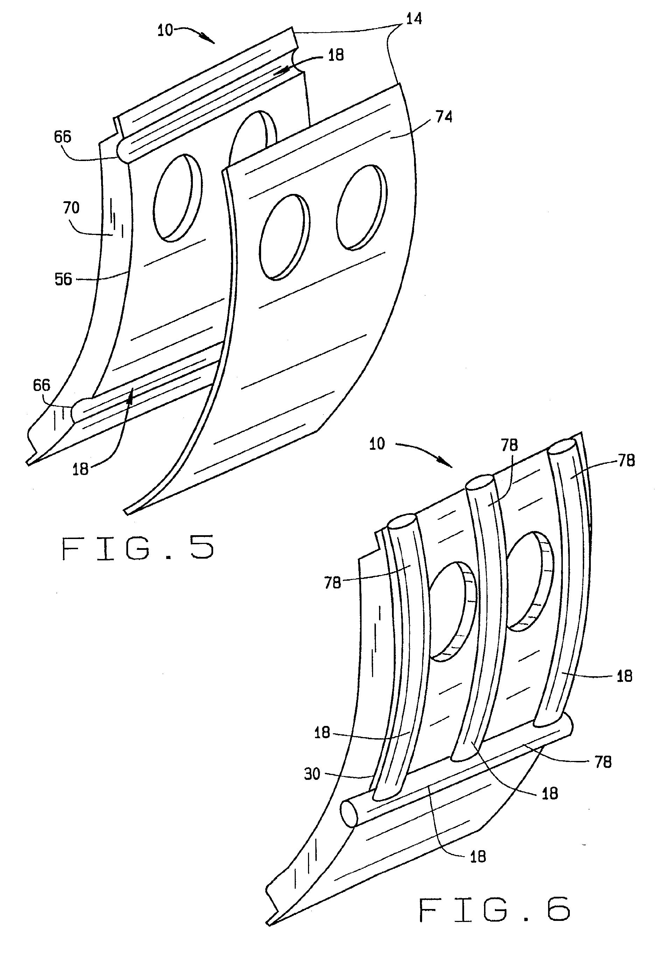

Referring now to Figure 5, in yet another preferred embodiment of the interior panel 10, the duct 18 is an internal cavity integrally formed with the body 14 by forming at least one recess 66 in a back side 56 of a first portion 70 of the body 14. The first portion 70 is formed to include the recess 66 using the low pressure forming process described above, preferably using the RIM process. The body 14 additionally includes a backing sheet 74 that is bonded or fused to the back side 56 of the first portion 70 to form the body 14. The backing sheet 74 covers the recess 66 to form the duct 18. Thus, the duct 18 is integrated with the body 14 by integrally forming the duct 18 within the body 14. The backing sheet 74 can be formed of any suitable material such as a reinforced thermo-plastic laminate.

Referring now to Figure 6, in still yet another preferred embodiment of the interior panel 10, the duct 18 is integrally formed with the body 14 by bonding at least one external conduit 78 to the back side 30 of the body 14. The conduit 78 is bonded to the back side 30 using any suitable means, such as mechanical snap fittings or spin welding. The conduit 78 is formed of any suitable material using any suitable method. For example, the conduit 78 can be comprised of Kevlar® mesh material and be formed using a 'table rolling' process.

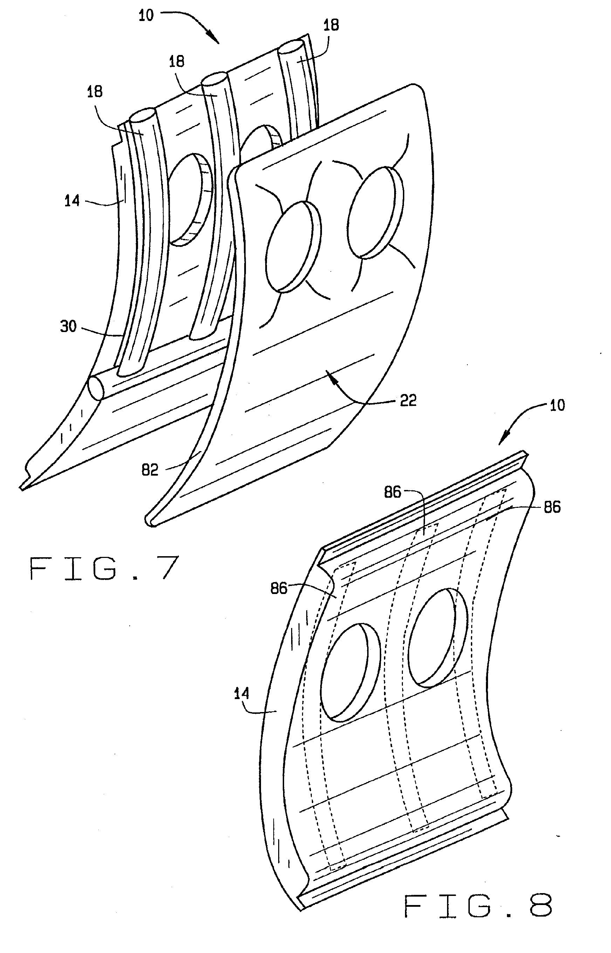

As described above, in reference to Figure 1, the insulation 22 can be provided by selecting an injection molding material having desired insulation properties. For example, polyurethane foam is a highly effective insulation material. Thus, by selecting a suitable injection molding material the insulation 22 is integrated with the body 14. Referring to Figure 7, in an alternate preferred embodiment, the insulation 22 comprises at least one insulation blanket 82 affixed to the back side 30 of the body 14. The insulation blanket 82 can be affixed to the back side 30 using any suitable means, for example gluing or riveting. The thickness of the body 14 can be adjusted during the low pressure forming process to accommodate for the thickness of the insulation blanket 82. Thus, the insulation 22 is integrated with the body 14 by affixing the insulation blanket 82 to the back side 30 of the body 14.

Referring now to Figure 8, in another preferred embodiment of present invention, the interior panel 10 includes at least one reinforcement insert to provide stiffness to the panel 10. Similar to the encapsulated duct 18 shown in Figure 1, the reinforcement insert 86 is integrally formed with the body 14 by encapsulating the reinforcement insert 86 within the body 14. The reinforcement insert 86 is secured inside the panel mold cavity prior to injection of the injection molding material. Once the reinforcement insert 86 is secured inside the panel mold cavity, the injection molding material is injected into the mold, preferably utilizing the RIM process. The injection molding material encapsulates the reinforcement insert 86 such that the reinforcement insert 86 is integrated with the body 14 by integrally forming the reinforcement insert 86 within the body 14. The reinforcement insert 86 can be a metallic insert or a non-metallic insert. Judicious selection of the material can provide the added benefit of enhanced bond strength, for example, polyurethane foam bonds well with urethane plastics. Although Figure 8 illustrates the interior panel 10 including only the reinforcement insert 86, it will be appreciated that interior panel 10 could have integrated therewith one, all, or any combination of the duct 18, the insulation 22 and the reinforcement insert 86.

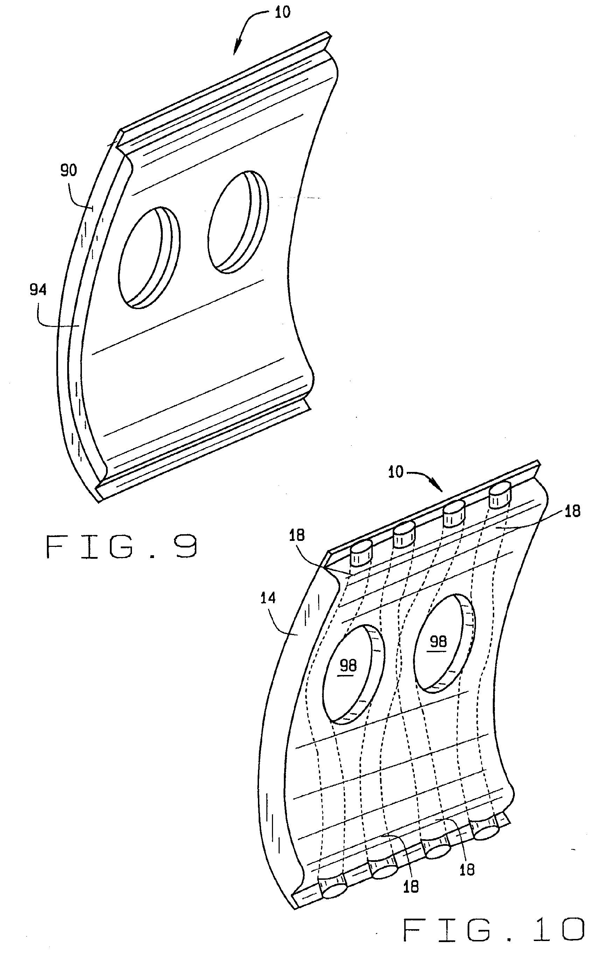

Referring to Figure 9, in another preferred embodiment, the interior panel 10 includes at least one of a front reinforcement shell 90 and a back reinforcement shell 94 to add reinforcement to the interior panel 10. More specifically, the front and back reinforcement shells 90 and 94 provide stiffness to the panel 10 by being constructed of a fiber reinforcement material. For clarity, it will be appreciated that the front reinforcement shell 90 faces the interior of the mobile platform, while the back reinforcement shell 94 faces the exterior of the mobile platform. The reinforcement material is draped over one or both sides of the panel mold cavity prior to injection of the injection molding material. The fiber reinforcement material can be in the form of a woven or nonwoven material. Additionally, the fiber reinforcement material can be dry, impregnated with a thermoplastic resin matrix, or impregnated with a thermoset resin matrix. The panel mold cavity is then injected with the injection molding material, preferably using the RIM process, as described above. In one preferred embodiment, the fiber reinforcement material is impregnated with a thermoplastic resin matrix to provide the added benefit enhanced impact resistance to interior panel 10. Although Figure 9 illustrates the interior panel 10 including at least one of the reinforcement shells 90 and 94, it will be appreciated that interior panel 10 could have integrated therewith one, all, or any combination of the duct 18, the insulation 22 and the reinforcement shells 90 and 94.

Referring now to Figures 1 and 10 through 14, the duct(s) 18 is/are connectable to a mobile platform infrastructure system, for example the ECS. To connect to the infrastructure system the duct(s) 18 can run vertically from top to bottom, horizontally from side to side, or vertically and horizontally through the interior panel 10. Additionally, the duct(s) 18 can have a generally straight longitudinal profile and/or a curved longitudinal profile. Furthermore the duct(s) 18 can have any suitable cross-sectional shape, e.g. round, rectangular, square, polygonal or triangular, and vary in cross-sectional area along the length of the duct(s) 18. Figures 1 and 10 through 14 illustrate various exemplary configurations of the duct(s) 18 integrated with the body 14. It will be appreciated that although Figures 1 and 10 through 14 illustrate the duct(s) 18 as being internally integrated with the body 14, the duct(s) 18 could likewise have the shown configurations while being externally integrated with the body 14.

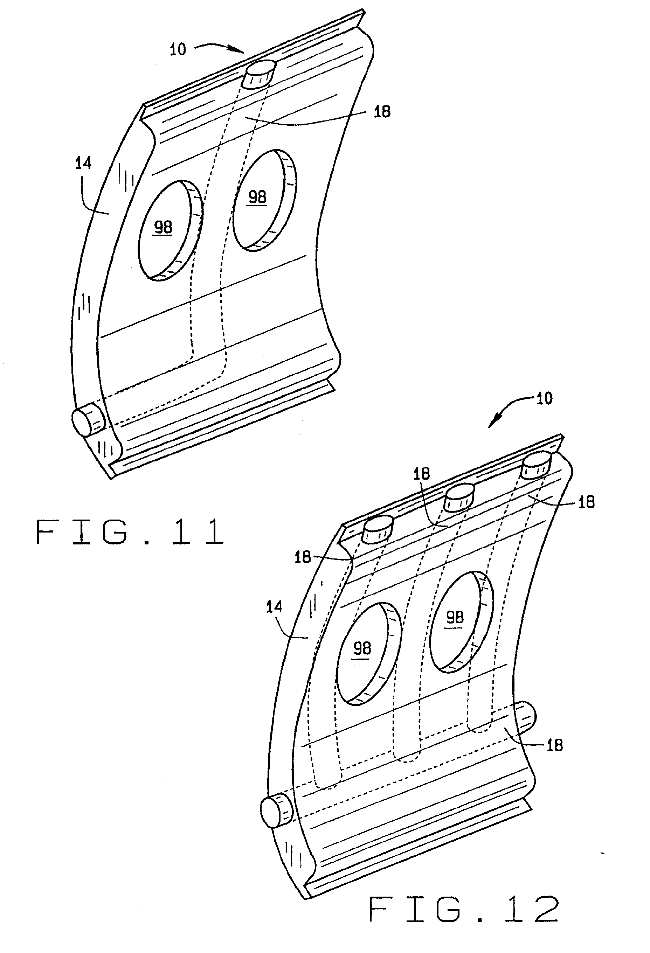

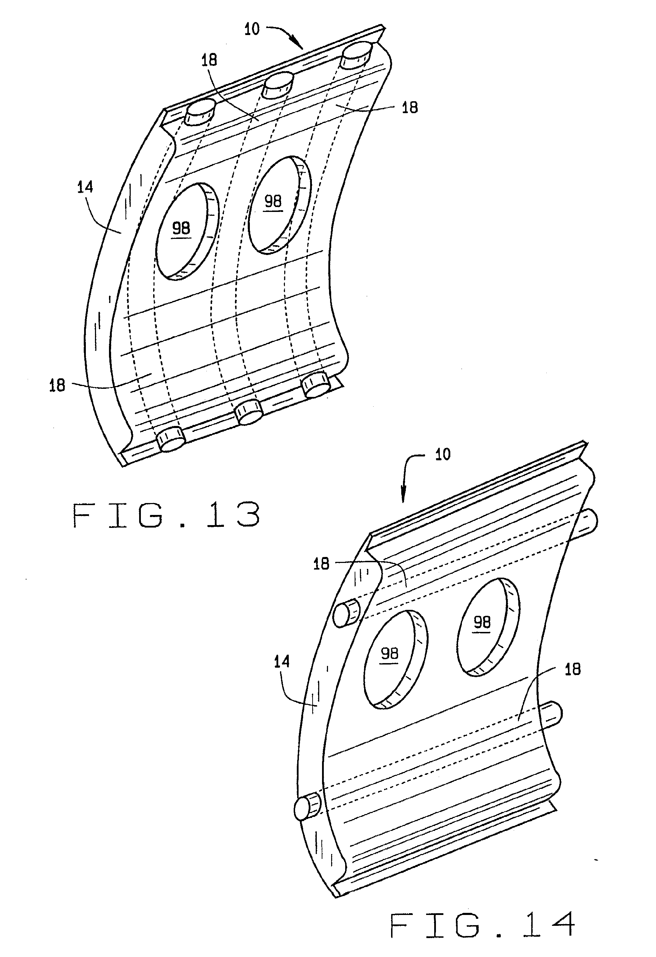

Figure 1 illustrates two vertical ducts 18 included in the body 14, wherein each duct 18 includes a generally annular section that contours around a window aperture 106 in the body 14. Figure 10 illustrates four vertical ducts 18 included in the body 14, wherein each duct 18 includes a curved section adapted to contour around window apertures 106. Figure 11 illustrates a generally 'L' shaped duct 18 included in the body 14. The 'L' shaped duct 18 has a horizontal leg extending below one window aperture 106 and a vertical leg that extends between the two window apertures 106. Figure 12 illustrates four ducts 18 included in the body 14. One of the ducts 18 extends horizontally through the body 14, while the other three ducts 18 run vertically within the body 14 and connect to the horizontal duct 18. Figure 13 illustrates three ducts 18 extending vertically through the body 14. One duct 18 is located between the window apertures 106. Each of the other two ducts 18 is located on an opposite side of a window aperture 106 from the duct 18 running between the window apertures 106. Figure 14 illustrates two ducts 18 extending horizontally through the body 14. One duct 18 is located above the window apertures 106 and the other duct 18 is located below the window apertures 106.

Figures 1 and 10 through 14 illustrate only a few of various configurations the duct(s) 18 could have within the scope of the invention. The duct(s) 18 can have any configuration suitable for incorporation of the interior panels 10 within a specific mobile platform fuselage structure and a specific infrastructural system. Therefore, the present invention should not be limited to the exemplary configurations of the duct(s) 18 illustrated in Figures 1 and 10 through 14. Additionally, the ducts 18 shown in Figures 1 through 14 are illustrated having the ends of each duct 18 extending from the body 14. That is, the ducts 18 are illustrated having male ends suitable for connection to a mobile platform infrastructure system such at the ECS. However, it will be appreciated that it is within the scope of the invention to have the ends of ducts 18 not extending from the body 14. More specifically, it is envisioned that the ducts 18 can have female ends connectable to a mobile platform infrastructure system.

Thus, the present invention provides the internal panel 10 having integrated therewith at least one of the duct(s) 18 and the insulation 22. By having at least one of the duct(s) 18 and the insulation 22 integrated with the interior panel 10, the interior lining structures of a mobile platform can be formed in a manner that reduces flow time, equipment, labor costs and manufacturing costs.

While the invention has been described in terms of various specific embodiments, those skilled in the art will recognize that the invention can be practiced with modification within the spirit and scope of the claims.

## Claims

1. A mobile platform interior panel, preferable an aircraft interior panel comprising:
a body formed by depositing, preferably by injecting, at least one molding material into at least one panel mold cavity; and
at least one of:
at least one duct integrated with the body; and at least one layer of insulation integrated with the body.

2. The panel of Claim 1, wherein the molding material comprises at least one low pressure foam injected into the panel mold cavity.

3. The panel of Claim 2, wherein the low pressure foam includes at least two chemicals that are simultaneously mixed and injected into the panel mold cavity, whereby the two chemicals combine to form the low pressure foam.

4. The panel of Claim 1, 2 or 3, wherein the body comprises a plurality of shell portions coupled together to form a panel shell, and wherein the molding material is deposited into the panel shell.

5. The panel of any of Claims 1-4, wherein the panel further comprises integrally formed reinforcing that includes at least one reinforcement shell that is placed in the panel mold cavity prior to depositing the molding material.

6. The panel of any of Claims 1-5, wherein the integrated duct comprises an internal cavity integrally formed in the body, the internal cavity comprising at least one conduit encapsulated within the molding material.

7. The panel of any of Claims 1-6, wherein the integrated insulation comprises the molding material adapted to have insulative properties once it is cured.

8. The panel of any of Claims 1-7, wherein the panel further comprises integrally formed reinforcing that comprises at least one reinforcement insert encapsulated within the molding material.

9. The panel of any of Claims 1-8, wherein the body comprises a plurality of panel portions coupled together, and wherein the panel portions are formed by depositing the molding material into a plurality of panel portion mold cavities.

10. The panel of any of Claims 1-9, wherein the integrated duct comprises an internal cavity integrally formed in the body, the internal cavity comprising at least one recess formed in a backside of each of at least two panel portions that are coupled together such that the recesses mate to form the internal cavity.

11. The panel of any of Claims 1-10, wherein the integrated duct comprises an internal cavity integrally formed in the body, the internal cavity comprising at least one recess formed in a backside of the body that is covered by a backing sheet to form the internal cavity.

12. The panel of any of Claims 1-11, wherein the integrated duct comprises at least one conduit attached to a backside of the body.

13. The panel of any of Claims 1-12, wherein the integrated insulation comprises at least one insulation blanket attached to a backside of the body.

14. A method of manufacturing a mobile platform interior panel or aircraft interior panel, said method comprising:
forming the panel by depositing at least one molding material into at least one panel mold cavity; and at least one of:
integrating at least one duct with the panel; and integrating at least one layer of insulation with the panel.

15. The method of Claim 14, wherein forming the panel comprises injecting the molding material into the panel mold cavity.

16. The method of Claim 14 or 15, wherein injecting the molding material comprises injecting at least one low pressure foam into the panel mold cavity.

17. The method of Claim 16, wherein injecting the low pressure foam comprises simultaneously mixing and injecting at least two chemicals into the panel mold cavity, whereby the chemicals combine to form the low pressure foam.

18. The method of any of Claims 14-17, wherein forming the panel comprises:
forming a plurality of shells;
coupling the shells together to form a hollow panel; and
depositing the molding material into the hollow panel.

19. The method of Claim 14, wherein forming the panel comprises:
forming a plurality of panel portions; and coupling the panel portions together to form the panel.

20. The method of any of Claims 14-19, wherein integrating at least one duct with the panel comprises forming at least one internal cavity in the panel simultaneously with forming the panel.

21. The method of Claim 20, wherein forming at least one internal cavity comprises:
forming the panel to have at least one recess in a backside; and covering the recesses with a backing sheet to thereby form the internal cavity.

22. The method of any of Claims 14-21, wherein integrating at least one layer of insulation comprises integrating insulation into the panel simultaneously with forming the panel.

23. The method of any of Claims 14-22, wherein the method further comprises simultaneously reinforcing the panel, preferably by positioning at least one reinforcement insert within the panel mold cavity prior to depositing the molding material; and encapsulating the reinforcement insert within the molding material as the molding material is deposited into the panel mold cavity, or inserting a reinforcement shell constructed of a reinforcing material into the panel mold cavity; and
subsequently depositing at the molding material into the panel mold cavity.

24. The method f any of Claims 14-23, wherein a panel according to any of Claims 1-13 is formed.
